Europäisches Patentamt

European Patent Office

Office européen des brevets

(11) Veröffentlichungsnummer: **0 202 463**

**A2**

(12) **EUROPÄISCHE PATENTANMELDUNG**

(21) Anmeldenummer: **86105054.0**

(22) Anmeldetag: **12.04.86**

(51) Int. Cl.4: **H04N 1/04**

(30) Priorität: **16.04.85 DE 3513518**
**01.08.85 DE 3527524**

(43) Veröffentlichungstag der Anmeldung:
**26.11.86 Patentblatt 86/48**

(84) Benannte Vertragsstaaten:
**AT DE FR GB IT NL**

(71) Anmelder: **International Standard Electric Corporation**
**320 Park Avenue**
**New York New York 10022(US)**
Anmelder: **Standard Elektrik Lorenz Aktiengesellschaft**
**Lorenzstrasse 10**
**D-7000 Stuttgart 40(DE)**

(72) Erfinder: **Deeg, Reinhard**
**Frankenstrasse 10**
**D-7236 Keltern/E(DE)**
Erfinder: **Kettenbach, Helmuth**
**Schubertstrasse 12**
**D-7505 Ettlingen(DE)**
Erfinder: **Galaske, Folker**
**Im Brünnlislehen 42**
**D-7530 Pforzheim(DE)**

(74) Vertreter: **Graf, Georg Hugo, Dipl.-Ing. et al**
**c/o Standard Elektrik Lorenz AG Patent- und Lizenzwesen Postfach 300 929 Kurze Strasse 8**
**D-7000 Stuttgart 30(DE)**

(54) **Gerät mit einer Abtasteinrichtung und einem Drucker.**

(57) Die abzutastenden Vorlagen (13) werden im Querformat über eine schwenkbar gelagerte Vorrichtung (9) mit Transportband (10) in die Abtastlage eingezogen. Nach der Abtastung wird die Vorlage - (13) in Pfeilrichtung (C) in ein Ablagefach (14) befördert. Unter dem Ablagefach (14) befindet sich ein zweites Ablagefach (5), in dem die vom Drucker in Pfeilrichtung (D) ausgegebenen Kopien (25) abgelegt werden. Der Drucker ist ein hochauflösender Thermodrucker. Es sind Schaltungsmittel vorgesehen, durch die das Gerät als Kopierer oder als Faksimilegerät (Fernkopierer) betrieben werden kann.

Eine Gerätevariante sieht einen Abtasterteil und einen Druckerteil in separaten Gehäusen vor, die sich zu einem Kompaktgerät zusammenfügen lassen, aber auch getrennt aufgestellt werden können. Die beiden Geräteteile sind über ein Kabel elektrisch miteinander verbunden. Sie können aber auch als Einzelgeräte verwendet werden.

Fig. 1

0 202 463

1a

R. Deeg 26/27-6/7- 31/32

### Gerät mit einer Abtasteinrichtung und einem Drucker

Die Erfindung geht von einem Gerät mit einem optischen Vorlagen-Abtaster und einem Matrixzeilendrucker gemäß dem Oberbegriff von Anspruch 1 aus.

Ein derartiges Gerät ist durch die DE-OS 34 25 953 bekannt. Bei dem als Mehrfarben-Kopierer ausgebildeten Gerät ist die zur Abtastung vorgesehene Vorlage unter eine zur Abtasteinrichtung gehörende schwenkbare Abdeckung von Hand einzulegen und nach der Abtastung wieder zu entnehmen. Neben der Abtasteinrichtung ist ein mit Thermofarbband arbeitender Thermodrucker mit zeilenbreitem Thermokopf angeordnet. Unterhalb des Druckers ist ein auswechselbares Blattmagazin angeordnet, das im eingeschobenen Zustand ein Stück aus dem Gerät vorsteht. Es sind Farbbandkassetten vorgesehen, die nach dem Öffnen einer seitlichen Klappe auswechselbar sind. Aus der Deckfläche des Gerätes ragt ein nach hinten geneigtes Ablagefach für die Kopien heraus. Sind viele Vorlagen zu kopieren, so ist das Einlegen von Hand zeitraubend. Eine Ablage fehlt. Das vorstehende Blattmagazin stört. Beim Wechsel der Farbbandkassette besteht keine Möglichkeit der visuellen Kontrolle der Farbbandführung. Das aus der Deckfläche herausragende Ablagefach ist optisch unschön und bietet keine hohe Sicherheit einer korrekten Ablage der Kopien.

Die Aufgabe der Erfindung besteht darin, ein Gerät mit einer Vorlagen-Abtasteinrichtung und einem hochauflösenden Matrixzeilendrucker zu - schaffen, das eine optimale Handhabung und Wartung ermöglicht.

Diese Aufgabe wird durch die im Anspruch 1 angegebenen Merkmale gelöst. Die Unteransprüche zeigen vorteilhafte Ausgestaltungen des Erfindungsgegenstandes auf.

Die durch die Erfindung erzielten Vorteile bestehen insbesondere darin, daß die abzutastenden Vorlagen automatisch in die Abtastlage eingezogen werden können und nach der Abtastung einem Ablagefach zugeführt werden, daß sich unter diesem Ablagefach ein zweites Ablagefach für die durch den Drucker erzeugten Kopien befindet und daß das die Ablagefächer enthaltende Oberteil des Gerätegehäuses aufklappbar ist. In dieser Stellung ist sowohl das Blattmagazin des Druckers gut zugänglich als auch die Farbbandeinrichtung und der Thermodruckkopf des Thermodruckers. Da die Abtasteinrichtung und der Drucker nur - schaltungsmäßig miteinander verbunden sind, sind Schaltungsmittel vorgesehen, die einen Betrieb des Gerätes als Faksimilegerät (Fernkopierer) ermöglichen. Durch die Trennbarkeit vom Abtaster-und Druckerteil ist neben der Verwendung als Kompaktgerät eine räumlich getrennte Aufstellung möglich ist. Außerdem können beide Geräteteile wegen der lösbaren Verbindungen im Bedarfsfall auch als Einzelgeräte verwendet werden.

Anhand eines Ausführungsbeispiels wird die Erfindung in Verbindung mit den Zeichnungen nachfolgend näher erläutert. Es zeigt:

Fig. 1 ein Gerät gemäß der Erfindung in Perspektivdarstellung

Fig. 2a und Fig. 2b das Gerät gemäß Fig. 1 in Blickrichtung A bei entfernter Gehäusewand

Fig. 3 das Gerät gemäß Fig. 1 in schematischer Darstellung.

Fig. 4 in Perspektivdarstellung das in zwei Geräteteile unterteilte Gerät gemäß Fig. 1

Fig. 5 das Gerät gemäß Fig. 4 in schematischer Darstellung

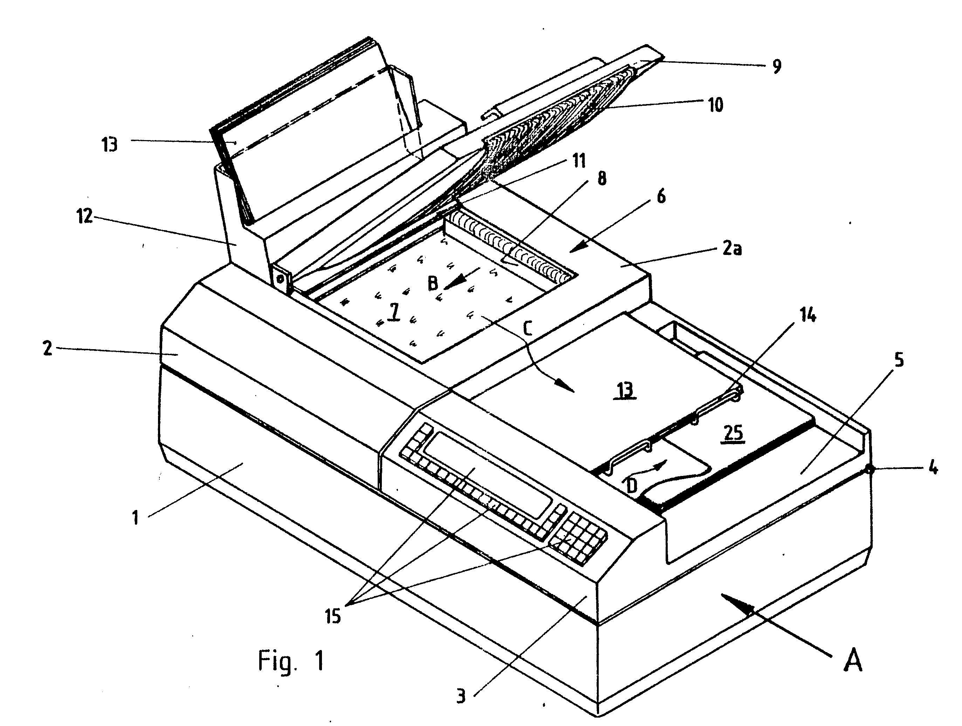

Fig. 1 zeigt in Perspektivdarstellung ein sowohl als Kopierer als auch als Faksimilegerät (Fernkopierer) verwendbares Gerät. Das Gerätegehäuse besteht aus einem Unterteil 1 und einem linken und einem rechten Oberteil 2 bzw. 3. Das linke Oberteil 2 ist fest mit dem Unterteil 1 verbunden. Im Oberteil 2 ist eine Vorlagen-Abtasteinrichtung 6 angeordnet, die z. B. gemäß der DE-OS 25 08 115 ausgebildet sein kann. Unter einer in die Deckfläche 2a des Oberteils 2 eingelassenen Glasplatte 7 ist ein Abtast wagen 8 in Pfeilrichtung B verschiebbar gelagert. Dieser hat ein optisches System mit einem Bildwandlerelement. Eine auf der Glasplatte 7 liegende Vorlage 13 wird im Verlauf der Wagenbewegung rasterlinienweise abgetastet. Das Wandlerelement setzt die Lichtwerte in einer nachgeordneten Elektronik in rasterpunktförmige Bildsignale umgesetzt.

Auf der Deckfläche 2a ist eine Vorrichtung 9 zum automatischen Einzug der Vorlagen 13 in die Abtastlage parallel zur Pfeilrichtung B schwenkbar angeordnet. Diese Vorrichtung 9 ist gemäß der älteren deutschen Patentanmeldung Nr. P 35 13 331.7 (eingereicht am 12.04.1985) ausgebildet. Sie hat ein zwischen einer Antriebswalze und einer Umlenkwalze gespanntes Transportband 10, über das die zugeführten Vorlagen 13 automatisch in die vorgesehene Abtastlage gezogen werden, in der sie an einem Stufenteil 11 anliegen. Die Welle der Antriebswalze ist gleichzeitig die Schwenkachse. In

2

Einzugsrichtung vor der Vorrichtung 9 ist eine Vereinzelungsvorrichtung 12 für die Vorlagen 13 angeordnet. Diese kann gemäß der älteren deutschen Patentanmeldung P 35 08 270.4 ausgebildet sein.

Das rechte Oberteil 3 des Gehäuses ist durch ein Scharnier 4 an der hinteren Längskante - schwenkbar mit dem Unterteil 1 verbunden. Das Oberteil 3 hat ein zur rechten Seite offenes Ablagefach 5 von der Breite der Einzugsvorrichtung 9. Im Bereich dieses Ablagefaches ist in etwa halber Höhe ein zweites Ablagefach 14 angeordnet.

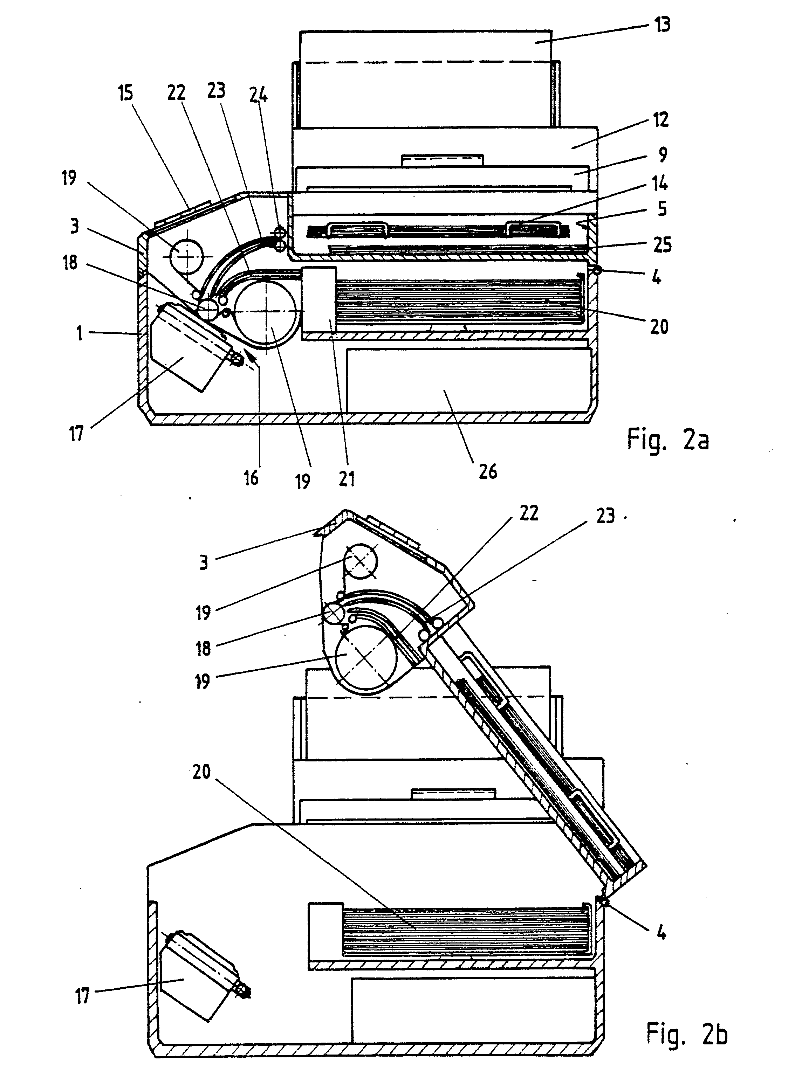

Die Figuren 2a und 2b zeigen das Gerät der Fig. 1 in Blickrichtung A bei entfernter Gehäusewand. Im vorderen Bereich des Gehäuseoberteils 3 und des Gehäuseunterteils 1 ist ein Thermozeilendrucker 16 angeordnet, bei dem die Aufzeichnung indirekt über ein zeilenbreites Thermofarbband erfolgt. Drucker dieser Art sind hinreichend bekannt, z. B. aus der eingangs genannten DE-OS 34 25 953. Die Darstellung kann daher auf die wesentlichen Teile beschränkt werden. Diese sind ein zeilenbreiter Thermoschreibkopf 17, eine Andruckwalze 18 und eine Farbbandeinrichtung 19 mit zeilenbreitem Thermofarbband. Während der Thermodruckkopf 17 im Gehäuseunterteil 1 fest angeordnet ist, sind die Andruckwalze 18 und die Farbbandeinrichtung 19 im oberen Gehäuseteil 3 befestigt. Im Bereich hinter dem Thermodrucker 16 ist unmittelbar unter dem Ablagefach 15 (Fig. 1) im unteren Gehäuseteil 1 ein Blattmagazin 20 ortsfest angeordnet. Unter diesem befindet sich das Netzgerät 26 für die Stromversorgung des Thermodruckers 16. Eine aus einer Vereinzelungsvorrichtung 21 und einem Zuführkanal 22 bestehende Zuführeinrichtung versorgt den Thermodrucke 16 in der benötigten Folgedichte mit Einzelblättern. Die jeweilige Kopie 25 der abgetasteten Vorlagen 13 gelangt in einen Führungskanal 23, der gemäß Fig. 2a unterhalb des oberen Ablagefachs 14 in das untere Ablagefach 5 mündet. Kurz vor dem Ende des Führungskanals 23 ist ein Transportrollenpaar 24 angeordnet.

Fig. 2b zeigt das Gerät mit aufgeklapptem oberen Gehäuseteil 3. Außer der Andruckwalze 18 und der Farbbandeinrichtung 19 sind auch der Zuführkanal 22 und der Führungskanal 23 am Gehäuseoberteil 3 befestigt.

In dieser Öffnungsstellung ist das Blattmagazin 20 gut zugänglich. Desgleichen die Farbbandeinrichtung 19, die zudem visuell kontrolliert werden kann. Auch der Thermodruckkopf 17 ist für Wartungszwecke frei zugänglich.

Nachfolgend wird anhand der Fig. 1 und Fig. 2a der Ab eines Kopiezyklus kurz beschrieben. Zum automatischen Einziehen einer Vorlage ist die Vorrichtung 9 heruntergeklappt. Die zur Abtastung vorgesehenen Vorlagen 13 werden im Querformat in den Schacht der Vereinzelungsvorrichtung 12 eingeführt. Mit dem Auslösen eines oder einer Folge von Kopiervorgängen über die Steuer-und Anzeigeeinrichtung 15, wird die unterste Vorlage 13 durch die Vereinzelungsvorrichtung 12 abgezogen. Sobald die Vorlage in den Bereich der Vorrichtung 9 gelangt, zieht diese die Vorlage in die vorgeschriebene Abtastlage ein. Da die Vorlagen 13 quer zur Einziehrichtung abgetastet werden, erfolgt dieses somit parallel zu den Schriftzeilen. Die von der Abtasteinrichtung 6 gelieferten Bildsignale werden elektronisch zwischengespeichert und in eine für den Thermodrucker 16 geeignete Form umgesetzt. Mit der Ansteuerung erhält der Thermodrucker 16 über die Zuführeinrichtung 21/22 ein Blatt aus dem Magazin 20, das er zu bedrucken beginnt. Zwischenzeitlich ist die Abtastung der Vorlage 13 beendet. Die Vorrichtung 9 fördert die abgetastete Vorlage 13 in Pfeilrichtung C aus der Abtasteinrichtung 6 heraus und legt diese in der Ablage 14 ab. Die vom Drucker 16 erstellte Kopie 13 schiebt sich langsam im Führungskanal 23 hoch bis sie an dessen Ende unterhalb des oberen Ablagefachs 14 in den Bereich des unteren Ablagefachs 5 heraustritt. Das Transportrollenpaar 24 erfaßt die Kopie 13 jedoch erst, wenn der Thermodrucker 16 das Blatt freigegeben hat. Die im Hochformat -entsprechend der Abtastung -bedruckte Kopie 25 wird durch das Transportrollenpaar 24 sodann über die restliche Länge in Pfeilrichtung D aus dem Führungskanal 23 herausgefördert und im unteren Ablagefach 5 abgelegt. Die Vorlagen 13 und die Kopien 25 liegen gleich ausgerichtet in eigenen Ablagefächern dicht übereinander, was ein gleichzeitiges Entnehmen erlaubt.

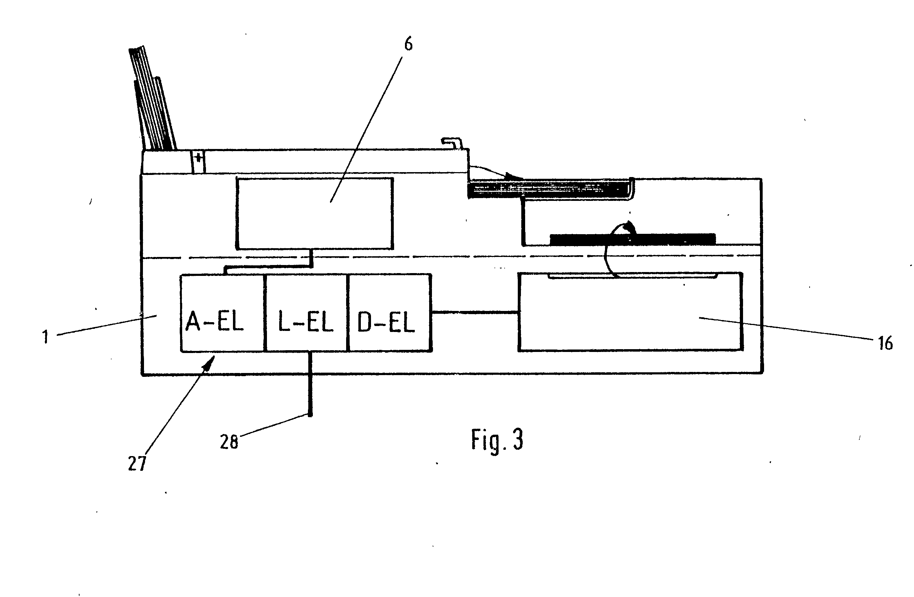

Fig. 3 zeigt das Gerät der Fig. 1 in schematischer Darstellung. Unterhalb der Abtasteinrichtung 6 ist im Gehäuse-Unterteil 1 eine Elektronikeinheit 27 angeordnet, über die der Abtaster 6 mit dem Thermodrucker 16 kommuniziert. Da die Abtasteinrichtung 6 und der Thermodrucker 16 nur über Signalwege miteinander in Verbindung stehen, bietet es sich an, Schaltungsmittel vorzusehen, durch die ein Schaltzustand herbeigeführt werden kann, in dem die Abtasteinrichtung 6 und der Thermodrucker 16 unabhängig voneinander betrieben werden können. Hierbei bietet sich aufgrund des hohen Auflösungsvermögens des Thermodruckers 16 die Verwendung des Gerätes als Faksimilegerät - (Fernkopierer) an. Die Elektronikeinheit 27 hat in diesem Fall außer einer Abtaster-Elektronik A-EL und einer Drucker-Elektronik D-EL ein mit beiden verbundene Leitungsanpassungselektronik L-EL. Letztere ist an eine Teilnehmerleitung 28 angeschlossen. Über die in Fig. 3 nicht dargestellte Steuer-und Anzeigeneinrichtung 15 (Fig. 1) läßt sich die Leitungsanpassungselektronik L-EL 20 so steuern, daß das Gerät im Off-Line-Betrieb als Kopierer zu benutzen ist, während im On-Line-Betrieb die Abtasteinrichtung 6 und der Thermodrucker 16 als Sende-und Empfangsteil des nunmehr als Faksimilegerät (Fernkopierer) geschalteten Gerätes arbeiten.

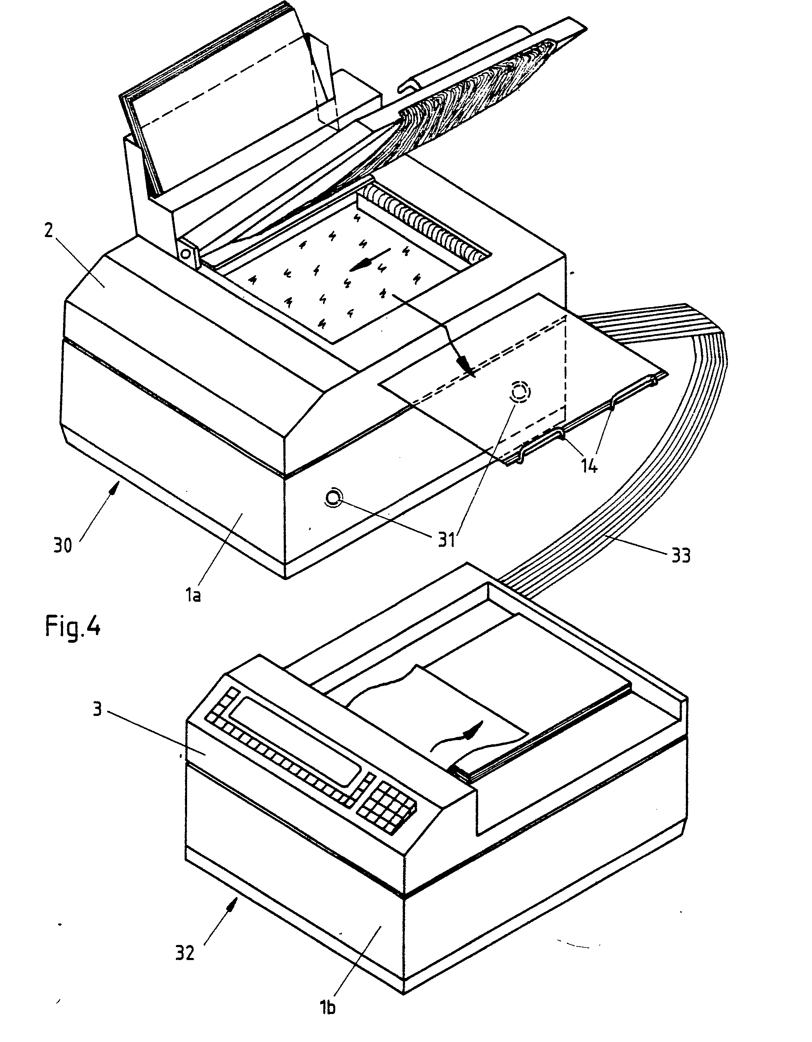

Die Fig. 4 zeigt eine Variante des vorbeschriebenen Gerätes, die zwei selbständige Geräteteile, einen Abtasterteil 30 und einen Druckerteil 32, vorsieht. Die Trennebene liegt, bezogen auf das Gerät gemäß Fig. 1 längs der Stoßfuge der Oberteile 2 und 3. Dadurch tritt an die Stelle des bisher gemeinsamen Unterteils 1 ein linkes Unterteil 1a und ein rechtes Unterteil 1b, die mit dem zugehörigen Oberteil 2 bzw. 3 separate Gehäuse für den Abtasterteil 30 und den Druckerteil 32 bilden. Das Ablagefach 14 ist dabei am Gehäuse 1a/2 des Abtasterteils 30 hochklappbar oder abnehmbar befestigt.

Die beiden Geräteteile können zum Kompaktgerät entsprechend Fig. 1 zusammengefügt werden. Zu diesem Zweck hat das Unterteil 1a des Abtasterteils 30 z. B. Gewindebohrungen 31, über die der Druckerteil 32 mittels Schrauben fest aber lösbar mit dem Abtasterteil 30 verbunden werden kann. In diesem Fall muß das Ablagefach 14 hochklappbar oder abnehmbar sein, damit das um die hintere Längskante schwenkbar gelagerte Oberteil 3 geöffnet werden kann. Die elektrische Verbindung zwischen dem Abtasterteil 30 und dem Druckerteil 32 erfolgt sowohl im zusammengebauten Zustand als auch bei getrennter Aufstellung durch ein Kabel 33 entsprechender Länge.

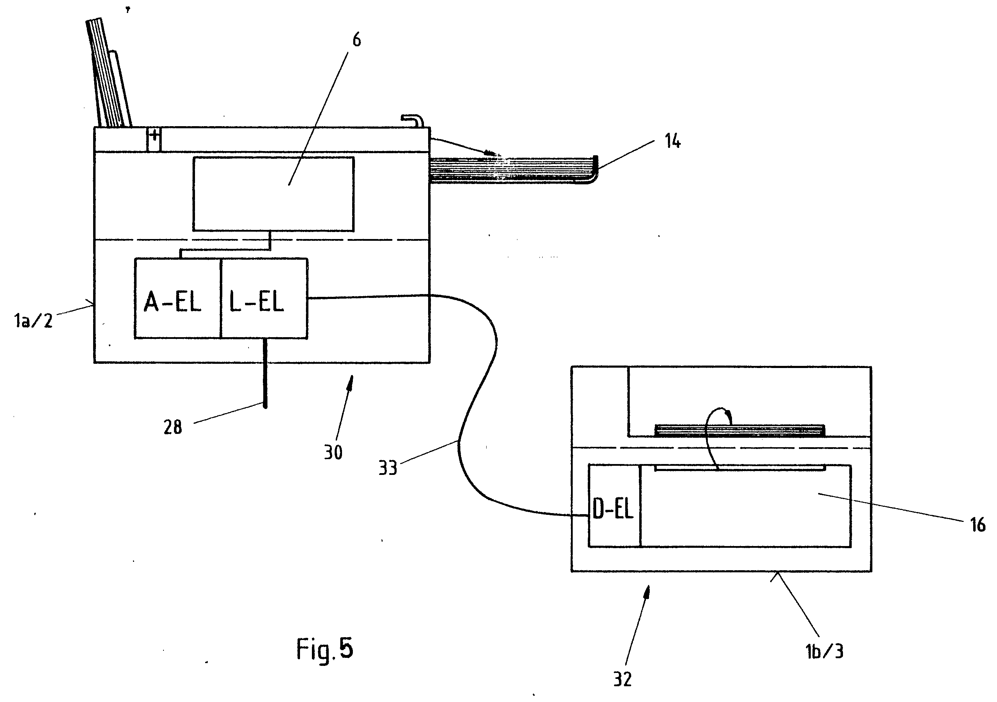

Fig. 5 zeigt die Variante gemäß Fig. 4 in - schematischer Darstellung. Im Gegensatz zur Ausführung gemäß Fig. 1 befindet sich die Druckerelektronik D-EL nunmehr im Gehäuse 1b/3 des Druckerteils 32. Über das Kabel 33 ist die Druckerelektronik D-EL mit der Leitungsanpassungselektronik L-EL im Abtasterteil 30 verbunden. Dadurch besteht die Möglichkeit, sowohl den Druckerteil 32 als auch den Abtasterteil 30 alleine zu verwenden.

**Ansprüche**

1. Gerät mit einer optischen Vorlagen-Abtasteinrichtung, die während der Abtastung Bildsignale erzeugt, einem neben der Abtasteinrichtung angeordneten hochauflösenden Matrixzeilendrucker, einem Blattmagazin für den Drucker und einer Zuführeinrichtung, wobei der Drucker durch die von der Vorlagen-Abtasteinrichtung erzeugten Bildsignale angesteuert wird und Kopien der abgetasteten Vorlagen erzeugt, einem Ablagefach für die Kopien und einer Steuer-und Anzeigeeinrichtung,

**dadurch gekennzeichnet**, daß der Abtasteinrichtung (6) eine Vorrichtung (9) zum automatischen Einzug der Vorlagen (13) zugeordnet ist, daß der Einzug quer zur Abtastrichtung erfolgt, daß in Einzugrichtung hinter der Abtasteinrichtung (6) ein Ablagefach (14) für die abgetasteten Vorlagen (13) angeordnet ist, daß sich das Ablagefach (5) für die Kopien (25) unter dem Ablagefach (14) für die Vorlagen (13) befindet, daß die Weiterleitung der Kopien (25) vom Drucker zum Ablagefach (5) über einen Führungskanal (23) erfolgt und daß sich das Blattmagazin (20) und die Zuführeinrichtung unter dem unteren Ablagefach (5) befinden.

2. Gerät nach Anspruch 1, dadurch gekennzeichnet, daß Schaltungsmittel (L-EL) vorgesehen sind, die einen Anschluß des Gerätes an eine Teilnehmerleitung ermöglichen und einen über die Steuer-und Anzeigeeinrichtung (15) wählbaren Betrieb als Faksimilegerät (Fernkopierer) gestatten.

3. Gerät nach Anspruch 1, dadurch gekennzeichnet, daß der hochauflösende Zeilenmatrixdrucker ein Thermodrucker (16) mit zeilenbreitem Thermokopf (17) ist und daß der Druck indirekt über ein zeilenbreites Thermofarbband erfolgt.

4. Gerät nach Anspruch 1, dadurch gekennzeichnet, daß die Vorrichtung (9) zum automatischen Einzug ein zwischen einer Antriebswalze und einer Umlenkwalze gespanntes Transportband (10) hat und daß die Vorrichtung (9) um die Antriebswalze - schwenkbar gelagert ist.

5. Gerät nach Anspruch 1, dadurch gekennzeichnet, daß die Zuführeinrichtung aus einer Vereinzelungsvorrichtung (21) und einem Zuführkanal (22) besteht.

6. Gerät nach Anspruch 1, 3 oder 5, dadurch gekennzeichnet, daß der die beiden Ablagefächer - (5, 14) und die Steuer-und Anzeigeeinrichtung (15) umfassende Teil (3) des Gerätegehäuses um die rückseitige Gehäuselängskante schwenkbar ist und daß die Andruckwalze (18) und die Thermofarbbandeinrichtung (19) des Thermodruckers (16), sowie der Zuführkanal (22) und der Führungskanal (23) im schwenkbaren Gehäuseteil (3) angeordnet sind.

7. Gerät nach Anspruch 1, dadurch gekennzeichnet, daß in Einzugrichtung vor der Vorrichtung (9) zum automatischen Einzug eine Vereinzelungsvorrichtung (12) für die zu bearbeitenden Vorlagen - (13) angeordnet ist.

8. Gerät nach Anspruch 1,

**dadurch gekennzeichnet**, daß das Gerät in zwei Teile unterteilt ist, ein Abtasterteil (30) und ein Druckerteil (32), die selbständige Einzelgeräte sind und so ausgebildet sind, daß sie mechanisch und/oder elektrisch verbindbar als ein einziges Gerät verwendbar sind.

9. Gerät nach Anspruch 1 oder 8, dadurch gekennzeichnet, daß das Ablagefach (14) hochklappbar oder abnehmbar am Abtasterteil (30) befestigt ist.

Fig. 1

0 202 463

R. Deeg 26/27-6/7- 31/32

0 202 463

Fig. 2a

Fig. 2b

R. Deeg 26/27 - 6/7 - 31/:

Fig. 3

A-EL  L-EL  D-EL

16

6

1

27

28

R.Deeg 26/27- 6/7- 31/32

0 202 463

Fig.4

R. Deeg  26/27 - 6/7 - 31/32

Fig. 5

0 202 463